# EUROPEAN PATENT APPLICATION

(11) **EP 4 446 826 A1**
(43) Date of publication of application: **16.10.2024**
(21) Application number: 23182909.4
(22) Date of filing: 30.06.2023
(51) Int. Cl.: G05B 15/02

(54) **BUILDING CONTROLLER WITH A DISPLAY THAT VISUALLY GROUPS OUTPUT CHANNELS ASSIGNED BY A USER TO A FLOATING POINT CONTROL CHANNEL**

(30) Priority: 14.04.2023 WO PCT/CN2023/088275
(71) Applicant: Honeywell International Inc., Charlotte, NC 28202 (US)
(72) Inventor: LEEN, Cary, Charlotte, NC 28202 (US); ZHOU, Wenbin, Charlotte, NC 28202 (US); LEWRY, Graham, Charlotte, NC 28202 (US); CALLAHAN, Kevin M., Charlotte, NC 28202 (US); HUTCHEY, John, Charlotte, NC 28202 (US); JONES, Lucian, Charlotte, NC 28202 (US)
(74) Representative: Houghton, Mark Phillip

(57) **Abstract**

A building controller receives from a user an assignment of a first output channel and a second output channel of the three or more output channels to provide a floating point control channel for an actuator. The controller displays a visual indication that the first output channel and the second output channel are assigned to provide the floating point control channel for the actuator and displays a current position of the actuator on the display. The controller accepts a user selection of a new position for the actuator and compares the new position with the current position and determines whether the actuator needs to be driven in the first direction or in the second direction in order to achieve the new position, and then selectively activates only one output channel of the floating point control channel to achieve the new position.

## Description

### TECHNICAL FIELD

The present disclosure relates generally to building controllers. More particularly, the present disclosure relates to building controllers that have a programmable floating point control channel.

### BACKGROUND

Floating point control uses two digital outputs of a building controller to control a device. For example, for an actuator, a floating point control channel uses one digital output used to open the actuator and the other digital output to close the actuator. Typically, only one of the digital outputs is activated at any given time. Activating both digital outputs at the same time can simultaneously command the actuator to open and close, which can produce undesirable results and possible damage the actuator.

What would be desirable is a building controller that is configured to group two or more output channels of the building controller into a floating point control channel, allow a user to set a desired position or setting for a device to be controlled by the floating point control channel, and intelligently control the group of two or more output channels to accomplish the desired position or setting.

### SUMMARY

The present disclosure relates generally to building controllers. More particularly, the present disclosure relates to building controllers that are configured to visually group output channels assigned by a user to a floating point control channel. An example may be found in a building controller that is configured to control a position of an actuator. The building controller includes three or more output channels, a user interface that includes a display, and a controller that is operably coupled to the user interface and the three or more output channels. The controller is configured to receive from a user via the user interface an assignment of a first output channel of the three or more output channels and a second output channel of the three or more output channels to collectively provide a floating point control channel for the actuator, with the first output channel assigned to drive the actuator in a first direction and the second output channel assigned to drive the actuator in a second direction. The controller is configured to display an indication on the user interface that visually indicates that the first output channel and the second output channel are assigned to provide the floating point control channel for the actuator and to display a current position of the actuator on the display. The controller is configured to accept via the user interface a user selection of a new position for the actuator and to compare the new position for the actuator with the current position for the actuator and determine whether the actuator needs to be driven in the first direction or in the second direction in order to achieve the new position. When it is determined that the actuator needs to be driven in the first direction to achieve the new position, the controller is configured to activate the first output channel of the floating point control channel to drive the actuator in the first direction to the new position while not activating the second output channel of the floating point control channel. When it is determined that the actuator needs to be driven in the second direction to achieve the new position, the controller is configured to activate the second output channel of the floating point control channel to drive the actuator in the second direction to the new position while not activating the first output channel of the floating point control channel.

Another example may be found in a building controller that is configured to control a building device in accordance with a setpoint. The building controller includes three or more output channels, a user interface that includes a display, and a controller that is operably coupled to the user interface and the three or more output channels. The controller is configured to visually identify on the display two of the output channels of the three or more output channels that are logically grouped together to provide a floating point control channel for controlling the building device in accordance with the setpoint. The controller is configured to control the two of the output channels of the three or more output channels that are logically grouped together to control the building device in accordance with the setpoint.

Another example may be found in a method for controlling a building device in accordance with a setpoint. The method includes visually identifying on a display of a user interface of a building controller two output channels of three or more output channels of the building controller that are logically grouped together to provide a floating point control channel for controlling the building device in accordance with the setpoint, and controlling the two of the output channels of the three or more output channels that are logically grouped together to control the building device in accordance with the setpoint.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram of an illustrative building controller;
Figure 2 is a flow diagram showing an illustrative method for controlling a building device in accordance with a setpoint; and
Figures 3 through 17 show illustrative operations of a user interface of a building controller.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

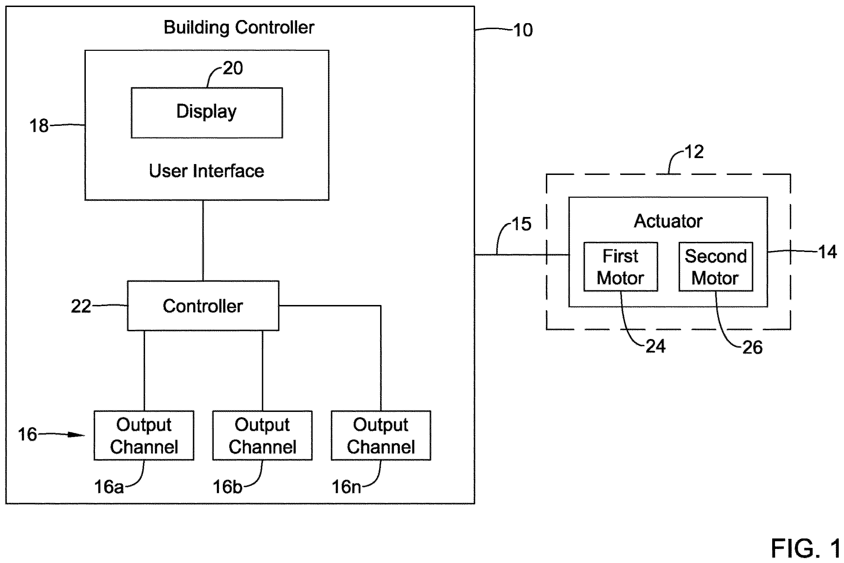

Figure 1 is a schematic block diagram of an illustrative building controller 10. The illustrative building controller 10 may be configured to control a building device 12. The building device 12 may be any of a variety of different components that are part of any of a variety of building systems such as but not limited to lighting systems, security systems and Heating, Ventilating and Air Conditioning (HVAC) systems, for example. In some cases, the building device 12 may be or otherwise include an actuator 14. In some instances, the actuator 14 may be opened or closed in order to affect operation of the building device 12.

In the example shown, the building controller 10 includes three or more output channels 16, individually labeled as 16a, 16b and 16c. While a total of three output channels 16 are shown, it will be appreciated that the building controller 10 may include four, five, six, eight or more output channels 16. In some instances, the output channels 16 may include a mix of digital output (DO) channels and analog output (AO) channels. In some instances, the output channels 16 may be all DO channels. The output channels 16 may include three or more DO channels. Although not explicitly shown in Figure 1, the building controller 10 may also include one or more input channels, such as one or more analog input (AI) channels and/or one or more digital input (DI) channels. The input channels may be wired to an output or one or more other devices, such the output of a sensor, the output of another building controller, and/or the output of any other suitable device or devices.

The building controller 10 of Figure 1 includes a user interface 18 with a display 20. In some instances, the user interface 18 may include a touch screen display that provides both data entry and display capabilities, for example. A controller 22 is operably coupled with the user interface 18 and with the three or more output channels 16. The controller 22 is configured to receive from a user via the user interface 18 an assignment of a first output channel (e.g. 16a) of the three or more output channels 16 and a second output channel (e.g. 16b) of the three or more output channels 16 to provide a floating point control channel 15 to control the actuator 14, with the first output channel assigned to drive the actuator 14 in a first direction and the second output channel assigned to drive the actuator in a second direction. The controller 22 is configured to display an indication on the user interface 18 that visually indicates to the user that the first output channel and the second output channel are assigned to provide the floating point control channel 15 for the actuator 14 and to display a current position of the actuator 14 on the display 20.

The controller 22 is configured to accept via the user interface 18 a user selection of a new position for the actuator 14 and to compare the new position for the actuator 14 with the current position for the actuator 14 and determine whether the actuator 14 needs to be driven in the first direction or in the second direction in order to achieve the new position. When it is determined that the actuator 14 needs to be driven in the first direction to achieve the new position, the controller is configured to activate the first output channel 16a of the floating point control channel 15 to drive the actuator 14 in the first direction to the new position while not activating the second output channel 16b of the floating point control channel 15. When it is determined that the actuator 14 needs to be driven in the second direction to achieve the new position, the controller 22 is configured to activate the second output channel 16b of the floating point control channel 15 to drive the actuator 14 in the second direction to the new position while not activating the first output channel 16a of the floating point control channel 15.

In some instances, the controller 22 may be configured to display a display element on the display 20 for each of the three or more output channels 16, where the display element for the first output channel and the display element for the second output channel are immediately adjacent one another. In some instances, the controller 22 may be configured to display a display element on the display 20 for each of the three or more output channels 16, where the display element for a third output channel is between the display element of the first output channel and the display element for the second output channel.

In some instances, the controller 22 may be configured to display a display element on the display 20 for each of the three or more output channels 16. The controller 22 may cause the display element for the first output channel to display an activation indicator when the first output channel of the floating point control channel 15 is activated to drive the actuator 14 in the first direction to the new position. The controller 22 may cause the display element for the second output channel to display an activation indicator when the second output channel of the floating point control channel 15 is activated to drive the actuator 14 in the second direction to the new position. In some instances, the controller 22 may be configured to display a display element on the display 20 for each of the three or more output channels 16, and the controller 22 may cause the display element for first output channel to display the current position of the actuator.

In some instances, the controller 22 may be configured to automatically control the position of the actuator 14 in an automatic mode. The controller 22 may switch to a manual mode when the controller 22 accepts via the user interface 18 a user selection of a new position for the actuator 14. The controller 22 may switch from the manual mode to the automatic mode when the controller 22 receives via the user interface 18 an automatic mode selection from the user.

In some instances, the actuator 14 may include a first motor 24 that is configured to drive the actuator 14 in the first direction and a second motor 26 that is configured to drive the actuator 14 in the second direction, wherein the first output channel of the floating point control channel 15 drives the first motor 24 and the second output channel of the floating point control channel 15 drives the second motor 26. When it is determined that the actuator 14 needs to be driven in the first direction to achieve the new position, the controller 22 may be configured to determine a first activation time duration needed to activate the first output channel of the floating point control channel 15 to drive the actuator 14 in the first direction to the new position, and then activate the first output channel of the floating point control channel 15 for the determined first activation time duration. When it is determined that the actuator 14 needs to be driven in the second direction to achieve the new position, the controller 22 may be configured to determine a second activation time duration needed to activate the second output channel of the floating point control channel 15 to drive the actuator 14 in the second direction to the new position, and then activate the second output channel of the floating point control channel 15 for the determined second activation time duration.

In some instances, the controller 22 may be configured to visually identify on the display 20 two of the output channels of the three or more output channels 16 that are logically grouped together to provide the floating point control channel 15 for controlling the building device 12 in accordance with a setpoint or other setting. The controller 22 may be configured to control the two of the output channels of the three or more output channels 16 that are logically grouped together to control the building device12 in accordance with the setpoint or other setting. In some instances, the controller 22 may be configured to display a display element on the display 20 for each of the three or more output channels 16 that are not logically grouped together to provide the floating point control channel 15.

In some instances, the controller 22 may be configured to receive from a user via the user interface 18 a selection of the two of the output channels from the three or more output channels 16 that are to be logically grouped together to provide the floating point control channel 15, and assign the selected two of the output channels to provide the floating point control channel 15. The controller 22 may be configured to receive a new setpoint (or other setting) for the building device 12 and to control the two of the output channels of the three or more output channels 16 that are logically grouped together to control the building device 12 in accordance with the new setpoint.

In some instances, the controller 22 may be configured to receive the new setpoint for the building device 12 by accepting via the user interface 18 a user selection of a new setpoint for the building device 12. In some instances, the controller 22 may be configured to receive the new setpoint for the building device 12 by one or more of receiving the new setpoint from a remote device over a network and/or receiving the new setpoint from a setpoint scheduler running on the building controller.

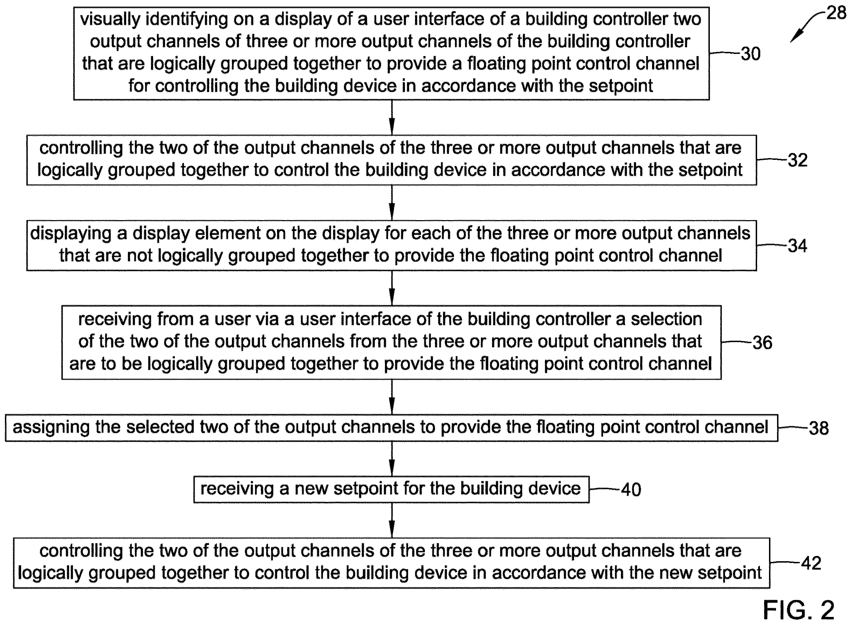

Figure 2 is a flow diagram showing an illustrative method 28 for controlling a building device (such as the building device 12) in accordance with a setpoint or other setting. The illustrative method 28 includes visually identifying on a display of a user interface of a building controller (such as the building controller 10) two output channels of three or more output channels (such as the output channels 16) of the building controller that are logically grouped together to provide a floating point control channel (such as floating point control channel 15) for controlling the building device in accordance with the setpoint, as indicated at block 30. The two of the output channels of the three or more output channels that are logically grouped together to control the building device are controlled in accordance with the setpoint, as indicated at block 32.

In some instances, the method 28 may include displaying a display element on the display for each of the three or more output channels that are not logically grouped together to provide the floating point control channel, as indicated at block 34. In some instances, the method 28 may include receiving from a user via a user interface of the building controller a selection of the two of the output channels from the three or more output channels that are to be logically grouped together to provide the floating point control channel, as indicated at block 36, and assigning the selected two of the output channels to provide the floating point control channel, as indicated at block 38. In some instances, the method 28 may include receiving a new setpoint for the building device, as indicated at block 40, and controlling the two of the output channels of the three or more output channels that are logically grouped together to control the building device in accordance with the new setpoint, as indicated at block 42.

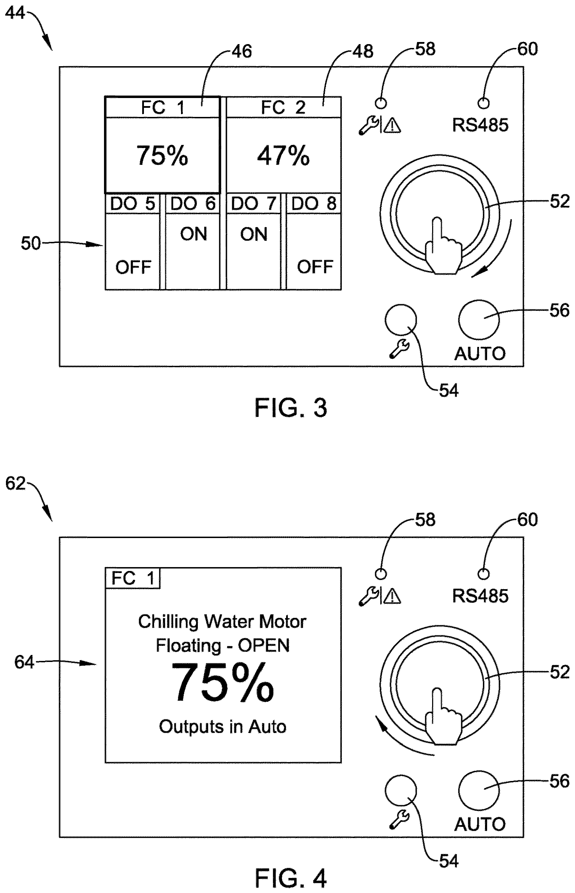

Figures 3 through 8 show illustrative operations of a user interface of a building controller (such as building controller 10). The illustrative user interface includes a display 20 (see Figure 1). In some cases, the display 20 displays a screen 44 as shown in Figure 3. Figure 3 shows a first floating point control channel 46 and a second floating point control channel 48. In this example, digital output channels DO1 and DO2 were configured by the controller 22 as a first floating point control channel 46 (FC1), and digital output channels DO3 and DO4 were configured by the controller 22 as a second floating point control channel 48 (FC2). The first floating point control channel 46 is highlighted. A display section 50 provides information regarding digital output channels DO5, DO6, DO7 and DO8. In this example, the screen 44 includes a dial 52 that may be rotated by hand (via a touch screen display 20) to enter a manual override mode to achieve a new manual actuator position. The screen 44 includes a setup touch button 54 and an AUTO touch button 56. The screen 44 includes a setup indicator light 58 and an RS485 indicator light 60. Rotating and pressing the dial 52, as indicated in Figure 3, causes a screen 62 to be displayed, as shown in Figure 4. While a touch screen 44 is shown, it is contemplated that the dial 52, setup button 54 and/or AUTO button 56 may be implemented with tactile dials/buttons adjacent to the screen 44.

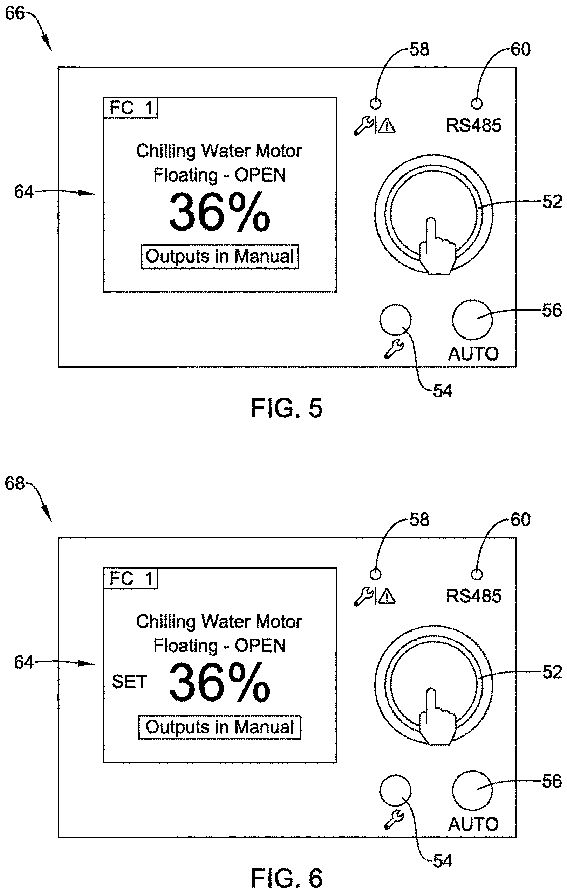

Figure 4 shows a screen 62, which shows the result of selecting the first floating point control channel 46 using the dial 52. The screen 62 includes an informational text box 64, which identifies which floating point control channel is being displayed (FC1). The informational text box 64 identifies the building device (e.g. building device 12) as a chilling water motor that controls a chilling water valve, as well as that the chilling water motor is currently under AUTO mode control, and is currently 75 percent open. Rotating the dial 52 will cause the controller 22 to enter a manual mode and change the desired position, as seen in Figure 5.

Figure 5 shows a screen 66. As can be seen, the informational text box 64 indicates that the desired new position for the chilling water valve is now 36 percent, and that the chilling water motor is now under manual mode control. In some cases, at least some of the text within the informational text box 64 may be blinking. Pressing the dial 52 again to confirm the value will cause the controller 22 to display a screen 68 to be displayed, as shown in Figure 6.

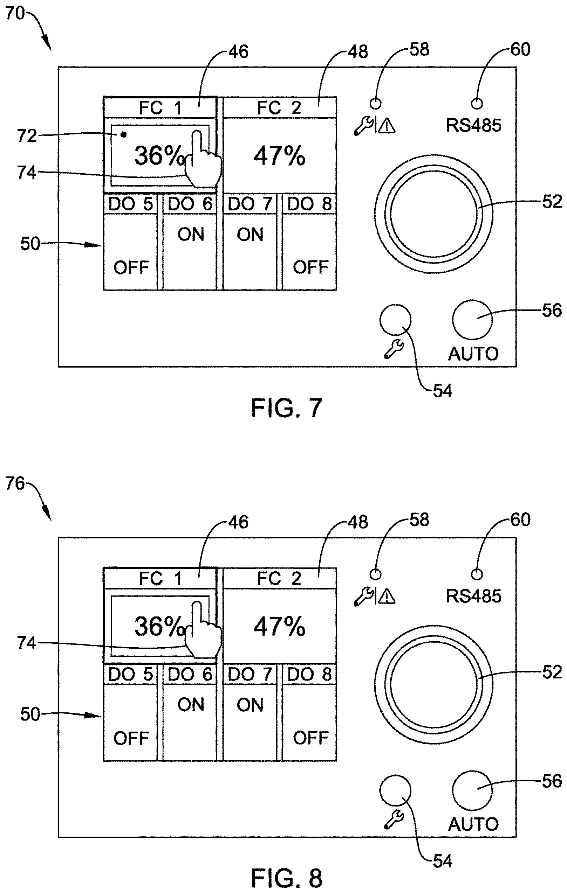

In Figure 6, the screen 68 includes the informational text box 64. As can be seen, the chilling water motor is now set to drive the corresponding valve to the newly set position of 36 percent open. The informational text box 64 also includes a SET indicator indicating that the new position is in effect. The text will have stopped blinking. The chilling water motor remains under manual control. The controller 22 will now display a screen 70, as seen in Figure 7.

In Figure 7, the screen 70 includes the first floating point control channel 46 and the second floating point control channel 48, as well as the display section 50. The first floating point control channel 46 is highlighted. The first floating point control channel 46 now displays a position of 36 percent, as previously set. The first floating point control channel 46 displays a dot 72 that indicates that it is the first floating point control channel that is executing the action. In some cases, the dot 72 may blink while the action is underway. A manual icon 74, which in some instances may represent a hand, provides an indication of manual control. Once the travel has been completed, the dot 72 will disappear, as seen on a screen 76, as seen in Figure 8. One feature to note in Figure 8 is that short pressing the AUTO button 56 will stop the manual override mode and return to an automatic mode. In the automatic mode, the setpoint may be provided by a remote device over a network and/or from a setpoint scheduler running on the building controller. These are just examples.

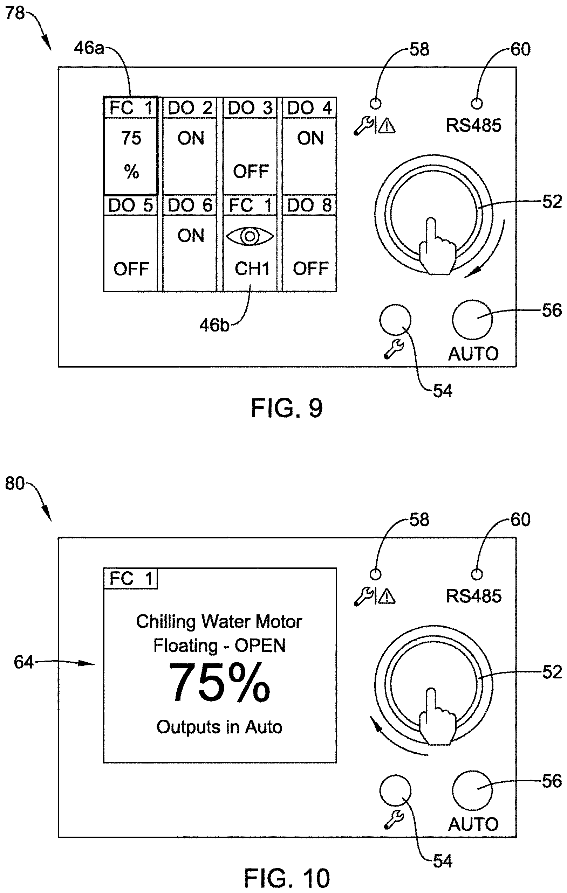

Figures 9 through 14 are screen shots of illustrative screens that the controller 22 may display on the display 20. In Figures 9 through 14, the two output channels assigned to a floating point control channel (FC1) are not side by side on the display. Figure 9 shows a screen 78 where digital output channels DO1 and DO7 are configured by the controller 22 as corresponding to the first floating point control channel (FC1), indicated at 46a and 46b. The floating point control channel icon 46a is highlighted. The screen 78 also includes information regarding the status of the other output channels including digital output channels DO2, DO3, DO4, DO5, DO6 and DO8. The screen 78 includes the dial 52 that may be rotated by hand to enter a manual override for a new setpoint (e.g. actuator position). The screen 78 includes the setup button 54 and the AUTO button 56. The screen 78 includes the setup indicator light 58 and the RS485 indicator light 60. Rotating and pressing the dial 52, as indicated in Figure 9, causes a screen 80 to be displayed, as shown in Figure 10.

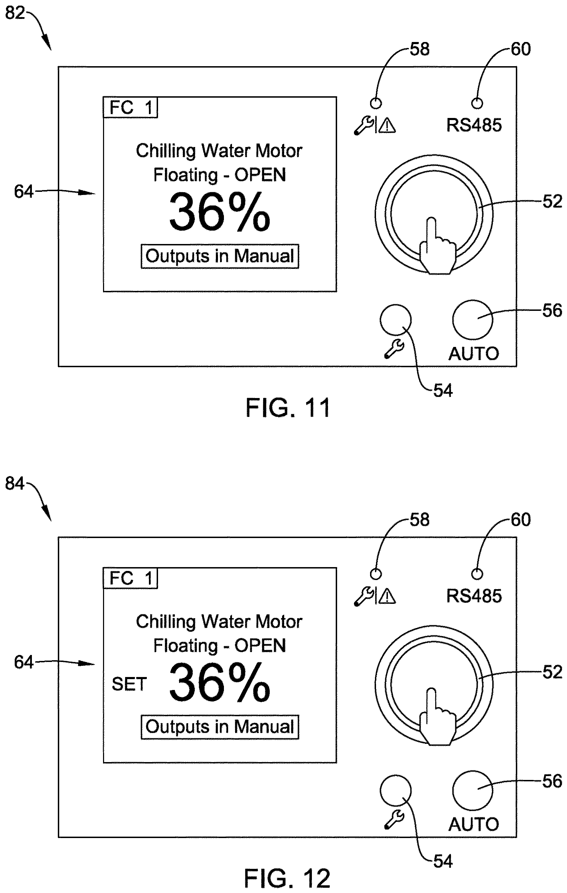

Figure 10 shows a screen 80, which shows the result of selecting the first floating point control channel 46. The screen 80 includes an informational text box 64, which identifies which floating point control channel (FC1) is being displayed. The informational text box 64 identifies the building device as a chilling water motor that controls a chilling water valve, as well as that the chilling water motor is currently under AUTO mode control, and is currently 75 percent open. Rotating the dial 52 will cause the controller 22 to change the desired position, as seen in Figure 11.

Figure 11 shows a screen 82. As can be seen, the informational text box 64 indicates that the desired new position for the chilling water valve is now 36 percent, and that the chilling water motor is now under manual control. In some cases, at least some of the text within the informational text box 64 may be blinking. Pressing the dial 52 again to confirm the value will cause the controller 22 to display a screen 84 to be displayed, as shown in Figure 12.

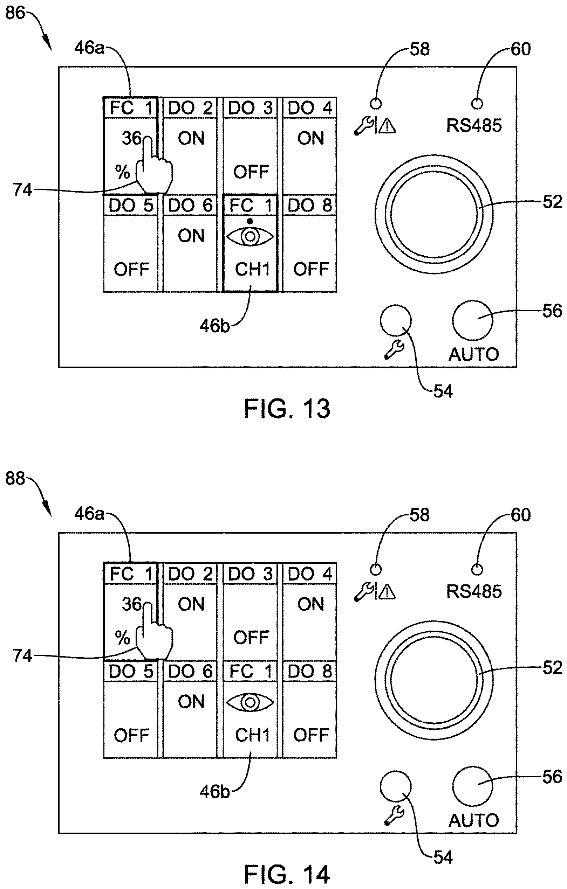

In Figure 12, the screen 84 includes the informational text box 64. As can be seen, the chilling water motor is now set to drive the corresponding valve to the newly set position of 36 percent open. The informational text box 64 also includes a SET indicator indicating that the new position is in effect. The text will have stopped blinking. The chilling water motor remains under manual control. The controller 22 will now display a screen 86, as seen in Figure 13.

In Figure 13, the screen 86 includes the first floating point control channel indicated by 46a and 46b, as well as information pertaining to the other output channels. The floating point control channel icon 46a now displays a position of 36 percent, as previously set. The floating point control channel icon 46a and the floating point control channel icon 46b are grouped by both being highlighted. The floating point control channel icon 46b displays the dot 72 that indicates that it is the first floating point control channel that is executing the action. In some cases, the dot 72 may blink while the action is underway. The manual icon 74, which in some instances may represent a hand, provides an indication of manual control. Once the travel has been completed, the dot 72 will disappear, as seen on a screen 88, as seen in Figure 14. The digital output DO7, which is grouped with digital output DO1 to form the first floating point control channel FC1, is labeled FC1 (rather than DO7) to indicate that it has been assigned to the first floating point control channel FC1. One feature to note in Figure 14 is that short pressing the AUTO button 56 will stop the manual mode override.

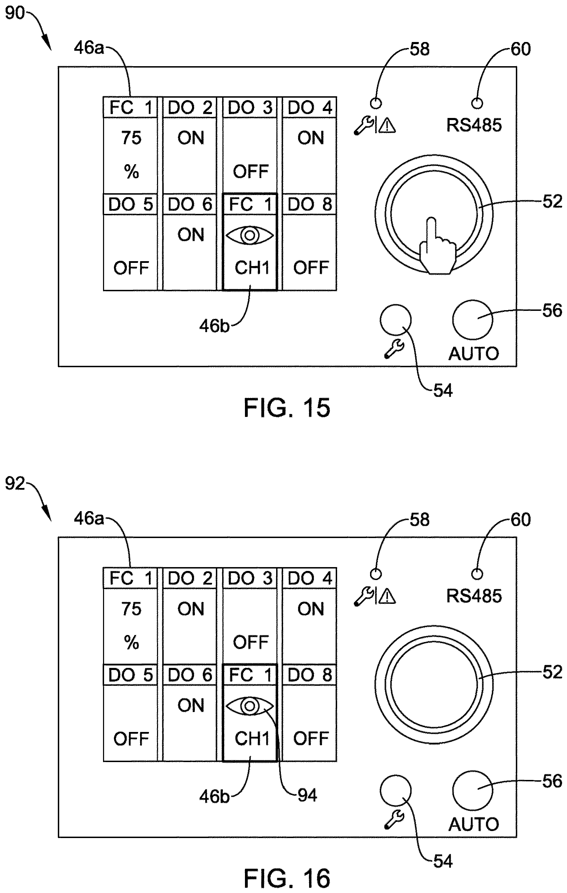

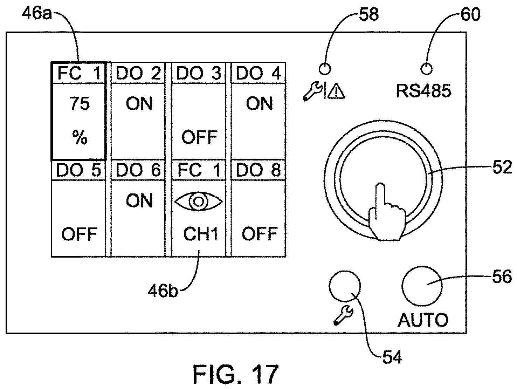

Figures 15 through 17 are screen shots of illustrative screens that the controller 22 may display on the display 20. In Figures 15 through 17, the two output channels (DO1 and DO7) are not side by side. In particular, digital output channels DO1 and DO7 have been grouped together to implement the first floating point control channel FC1, indicated at 46a and 46b. In Figures 15 through 17, a close action has been selected. In this example, DO1 of the first floating point control channel FC1 is activated to open the actuator 14 and DO7 is activated to close the actuator 14. Because the controller 22 is closing the actuator in the example of Figures 15-16, floating point control channel icon 46b is highlighted to notify the user that DO7 is being activated by controller 22 to move the actuator 14 in the closing direction. Rotating and pressing the dial 52 will allow entry into the floating point control channel FC1, and the controller 22 will display a screen 92 as shown in Figure 16. In Figure 16, the screen 92 shows that an icon 94, which is part of the floating point control channel icon 46b, will blink. The icon 94 will stop blinking, as seen in a screen 96 shown in Figure 17.

The controller 22 may allow a user to assign any of the outputs DO1-D08 to a floating point control channel via the user interface of the building controller 10. In some cases, the user may use the dial 52 to select a first one of the outputs (e.g. D01) and a second one of the outputs (e.g. DO7), and assign the selected first and second outputs to a first floating point control channel FC1. The user may have wired, or will wire, the selected first and second outputs to the respective inputs of the actuator 14. In some cases, the user may use the dial 52 to select a third one of the outputs (e.g. D05) and a fourth one of the outputs (e.g. DO6), and assign the selected third and fourth outputs to a second floating point control channel FC2. The second floating point control channel FC2 may be used to control another actuator or the like. Thus, an installer installing the building controller 10 and wiring the outputs of the building controller 10 may easily program the building controller 10 to group selected ones of the outputs as a floating point control channel, and the controller is programmed to intelligently control the grouped output channels in an appropriate manner, such as activate a first output channel of the floating point control channel to drive the actuator in a first direction while not activating the second output channel of the floating point control channel, and activate a second output channel of the floating point control channel to drive the actuator in a second direction while not activating the first output channel of the floating point control channel.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A building controller configured to control a position of an actuator, the building controller comprising:
three or more output channels;
a user interface including a display;
a controller operably coupled with the user interface and the three or more output channels, the controller configured to:
receive from a user via the user interface an assignment of a first output channel of the three or more output channels and a second output channel of the three or more output channels to provide a floating point control channel for the actuator, with the first output channel assigned to drive the actuator in a first direction and the second output channel assigned to drive the actuator in a second direction;
display an indication on the user interface that visually indicates that the first output channel and the second output channel are assigned to provide the floating point control channel for the actuator;
display a current position of the actuator on the display;
accept via the user interface a user selection of a new position for the actuator;
compare the new position for the actuator with the current position for the actuator and determine whether the actuator needs to be driven in the first direction or in the second direction in order to achieve the new position;
when it is determined that the actuator needs to be driven in the first direction to achieve the new position, activate the first output channel of the floating point control channel to drive the actuator in the first direction to the new position while not activating the second output channel of the floating point control channel; and
when it is determined that the actuator needs to be driven in the second direction to achieve the new position, activate the second output channel of the floating point control channel to drive the actuator in the second direction to the new position while not activating the first output channel of the floating point control channel.

2. The building controller of claim 1, wherein the three or more output channels include three or more digital output channels.

3. The building controller of claim 1, wherein the three or more output channels include digital output channels and analog output channels, and wherein the first output channel and the second output channel are each assigned to a different digital output channel.

4. The building controller of claim 1, wherein the controller is configured to:
display a display element on the display for each of the three or more output channels; and
wherein the display element for the first output channel and the display element for the second output channel are immediately adjacent one another.

5. The building controller of claim 1, wherein the controller is configured to:
display a display element on the display for each of the three or more output channels; and
wherein the display element for a third output channel is between the display element of the first output channel and the display element for the second output channel.

6. The building controller of claim 1, wherein the controller is configured to:
display a display element on the display for each of the three or more output channels;
wherein the controller causes the display element for the first output channel to display an activation indicator when the first output channel of the floating point control channel is activated to drive the actuator in the first direction to the new position; and
wherein the controller causes the display element for the second output channel to display an activation indicator when the second output channel of the floating point control channel is activated to drive the actuator in the second direction to the new position.

7. The building controller of claim 1, wherein the controller is configured to:
display a display element on the display for each of the three or more output channels; and
wherein the controller causes the display element for first output channel to display the current position of the actuator.

8. The building controller of claim 1, wherein the controller is configured to:
automatically control the position of the actuator in an automatic mode;
switch to a manual mode when the controller accepts via the user interface the user selection of the new position for the actuator; and
switch from the manual mode to the automatic mode when the controller receives via the user interface an automatic mode selection from the user.

9. The building controller of claim 1, wherein the actuator includes a first motor configured to drive the actuator in the first direction and a second motor configured to drive the actuator in the second direction, wherein the first output channel of the floating point control channel drives the first motor and the second output channel of the floating point control channel drives the second motor.

10. The building controller of claim 1, wherein:
when it is determined that the actuator needs to be driven in the first direction to achieve the new position, the controller is configured to determine a first activation time duration needed to activate the first output channel of the floating point control channel to drive the actuator in the first direction to the new position, and then activate the first output channel of the floating point control channel for the determined first activation time duration; and
when it is determined that the actuator needs to be driven in the second direction to achieve the new position, the controller is configured to determine a second activation time.

11. A method for controlling a building device in accordance with a setpoint, the method comprising:
visually identifying on a display of a user interface of a building controller two output channels of three or more output channels of the building controller that are logically grouped together to provide a floating point control channel for controlling the building device in accordance with the setpoint; and
controlling the two of the output channels of the three or more output channels that are logically grouped together to control the building device in accordance with the setpoint.

12. The method of claim 11, further comprising:
displaying a display element on the display for each of the three or more output channels that are not logically grouped together to provide the floating point control channel.

13. The method of claim 11, further comprising:
receiving from a user via a user interface of the building controller a selection of the two of the output channels from the three or more output channels that are to be logically grouped together to provide the floating point control channel; and
assigning the selected two of the output channels to provide the floating point control channel.

14. The method of claim 11, further comprising:
receiving a new setpoint for the building device; and
controlling the two of the output channels of the three or more output channels that are logically grouped together to control the building device in accordance with the new setpoint.

15. A building controller configured to control a building device in accordance with a setpoint, the building controller comprising:
three or more output channels;
a user interface including a display;
a controller operably coupled with the user interface and the three or more output channels, the controller configured to:
visually identify on the display two of the output channels of the three or more output channels that are logically grouped together to provide a floating point control channel for controlling the building device in accordance with the setpoint; and
control the two of the output channels of the three or more output channels that are logically grouped together to control the building device in accordance with the setpoint.
